# EUROPEAN PATENT APPLICATION

(11) **EP 2 827 273 A1**
(43) Date of publication of application: **21.01.2015**
(21) Application number: 14180994.7
(22) Date of filing: 28.06.2011
(51) Int. Cl.: G06F 21/56, H04L 29/06

(54) **System and method for dynamic generation of anti-virus databases**

(30) Priority: 28.03.2011 RU 2011111600
(62) Divisional of application: 11171616.3
(71) Applicant: Kaspersky Lab, ZAO, Moscow 125212 (RU)
(72) Inventor: Doukhvalov, Andrey P., 125212 Moscow (RU)
(74) Representative: Sloboshanin, Sergej

(57) **Abstract**

Disclosed is a computer-implemented system for dynamic generation of anti-virus (AV) databases, the system being part of a server (110) within a server-client environment. The system comprises a server-side AV database (315) containing data related to known malware objects; a request processing module (311) configured for receiving and processing user requests from a user computer (120-128, 210), the user requests comprising data reflecting parameter changes in the user computer (120-128, 210); and a server update module (316). The system is characterized by a user profile database (312) connected to the request processing module (311), the user profile database (312) containing parameter changes which were inserted into the user profile database (312) by the request processing module (311); a data processing module (313) connected to the request processing module (311) and to the user profile database (312), wherein the data processing module (313) is configured to generate requirements for a user-side AV database (216) based on the parameter changes received from the user profile database (312); and by a data selection module (314) configured for receiving the requirements for the user-side AV database (216) from the data processing module (313) and for preparing required data by selecting a subset from the server-side AV database (315) based on the requirements, wherein the server update module (316) is connected to the data selection module (314) and is configured for sending the subset to the user computer (120-128, 210) for updating the user-side AV database (216); wherein the parameter changes comprise changes in a user geographical location; and wherein the subset is the minimal relevant subset required for virus or malware detection on the user computer (120-128, 210) after the parameter changes.

## Description

### Background of the Invention

### Field of the Invention

The present invention is related to methods for anti-virus (AV) protection and, in particular, to a method and system for dynamic generation of AV databases based on parameters of a user computer.

### Description of the Related Art

Security of data located on user PCs, mobile devices or within enterprise systems is a problem that only becomes more complex every day. A large number of new malware applications appear practically every day. Each of these malware applications can cause computer failures or result in a loss or theft of critical personal user data. Many of the known malware applications are modified so they become harder to detect.

In order to maintain a necessary level of data security, vendors of AV systems have to constantly update their AV databases that are used for virus or malware detection. Modem AV databases contain various types of data: malware signatures (including heuristic signatures), blacklists of malicious object checksums, blacklists of web sites, executable codes of data unpacking algorithms and codes of heuristic data analysis, data for dealing with detected threats, etc.

In addition to these types of data, the AV databases can contain a code needed for updating components of the AV system. Thus, the AV databases are not only used for keeping the current signatures, but for updating the actual AV system. Data contained in the AV databases can be represented differently based on the AV system that uses them. The format and representation of the data are selected based on criteria such as, for example, simplicity of update, convenience of use, size, etc.

The data can be represented as a plurality of files of different formats, for example, as a dynamic link library (DLL), as XML files, or as proprietary formats used by a particular AV system. Currently, typical AV databases contain large volumes of various data that constantly increases in volume. This is caused by new malware appearing every day and corresponding data being inserted into the AV database. The ever-increasing size of AV databases makes them less suitable for frequent updates. A method for reducing a size of the AV database is desired.

A tendency of rapid increasing of the AV databases is a problem that is already critical for producers of the AV systems. It is desired to make the AV databases more convenient and mobile. Update of AV applications based on various parameters is disclosed in publications WO2010024606A2 and KR2009111152A.

WO2010024606A2 discloses a system and method for selection of data for computers based on an operating system and a version of an AV application used. KR2009111152A describes a system for updating AV systems. The system is based on classification of the files that need to be checked and generating a list of required updates.

These systems have some disadvantages. For example, the AV databases are generated manually based on a limited list of parameters. The AV database is created without taking into account overall security needs of a user, apart from checking the user files. U.S. Patent No. 7,743,419 discloses a method for preventing computer virus epidemics. The method is based on collecting user PC information and analyzing it for signs of an epidemic. The epidemics can be predicted and prevented.

Accordingly, there is a need in the art for a system for dynamic generation of the AV databases based on parameters of a user computer without affecting the effectiveness of malware detection system that uses the AV database.

### Summary of the Invention

The present invention is related to methods for anti-virus (AV) protection. The present invention provides a method, system and computer program product for dynamic generation of AV databases based on parameters of a user computer that substantially obviates one or several of the disadvantages of the related art.

In one aspect of the invention, a method for reducing the size of the AV database by dynamically generating an AV database according to user parameters is provided. According to an exemplary embodiment, critical user parameters that affect the content of the AV database required for this user are determined. The AV database for the single user is generated based on the user parameters. When the parameters of the user computer change or when new malware threats are detected, the user AV database is dynamically updated according to the new parameters and the new malware threats.

The update procedure becomes more efficient, since a need of updating large volumes of data is eliminated. The AV system, working with a small AV database, finds malware objects more efficiently and uses fewer computer system resources.

Additional features and advantages of the invention will be set forth in the description that follows, and in part will be apparent from the description, or may be learned by practice of the invention. The advantages of the invention will be realized and attained by the structure particularly pointed out in the written description and claims hereof as well as the appended drawings.

It is to be understood that both the foregoing general description and the following detailed description are exemplary and explanatory and are intended to provide further explanation of the invention as claimed.

### Brief Description of the Attached Figures

The accompanying drawings, which are included to provide a further understanding of the invention and are incorporated in and constitute a part of this specification, illustrate embodiments of the invention and, together with the description, serve to explain the principles of the invention.

In the drawings:
**FIG. 1** illustrates a general arrangement of a plurality of user computers, a server and an AV database, in accordance with the exemplary embodiment;
**FIG. 2** illustrates a client side of a system dynamic update of AV database, in accordance with the exemplary embodiment;
**FIG. 3** illustrates a server side of a system for dynamic update of client AV databases, in accordance with the exemplary embodiment;
**FIG. 4** illustrates a structure of a user profile database, in accordance with the exemplary embodiment;
**FIG. 5** illustrates a flow chart of a method for dynamic generation of the AV databases, in accordance with the exemplary embodiment;
**FIG. 6** illustrates a schematic of an exemplary computer system that can be used for implementation of the invention.

### Detailed Description of the Preferred Embodiments

Reference will now be made in detail to the preferred embodiments of the present invention, examples of which are illustrated in the accompanying drawings.

According to an exemplary embodiment, a method and system for reducing the size of the AV database by dynamically generating an AV database according to user parameters are provided. The critical user parameters that affect the content of the AV database required for this user are determined. The AV database for the individual user is generated based on the user parameters. When the parameters of the user computer change or when new malware threats are detected, the user AV database is dynamically updated according to the new parameters and the new malware threats.

All of the known malware objects (such as, for example, computer viruses, Trojans, worms, rootkits, etc.) along with some new objects can be detected by the AV systems. However, a user, who has an AV application running on his computer, does not need a full AV database that includes a large number of objects the user is likely to never come across. For example, user side AV database does not need to be updated with a blacklist of the web sites from one domain area, while the user only visits another (different) domain and never visits the sites from the first domain.

Furthermore, user PCs have different version of OSs running on them. Different OS versions have different types of malware threats. Thus, using the AV database generated for a specific OS is more efficient as opposed to a universal AV database that works with all OSs and contains large volumes of unnecessary and redundant information. The preferred embodiment addresses these issues by generating an AV database specifically for a particular user computer based on the parameters of this computer.

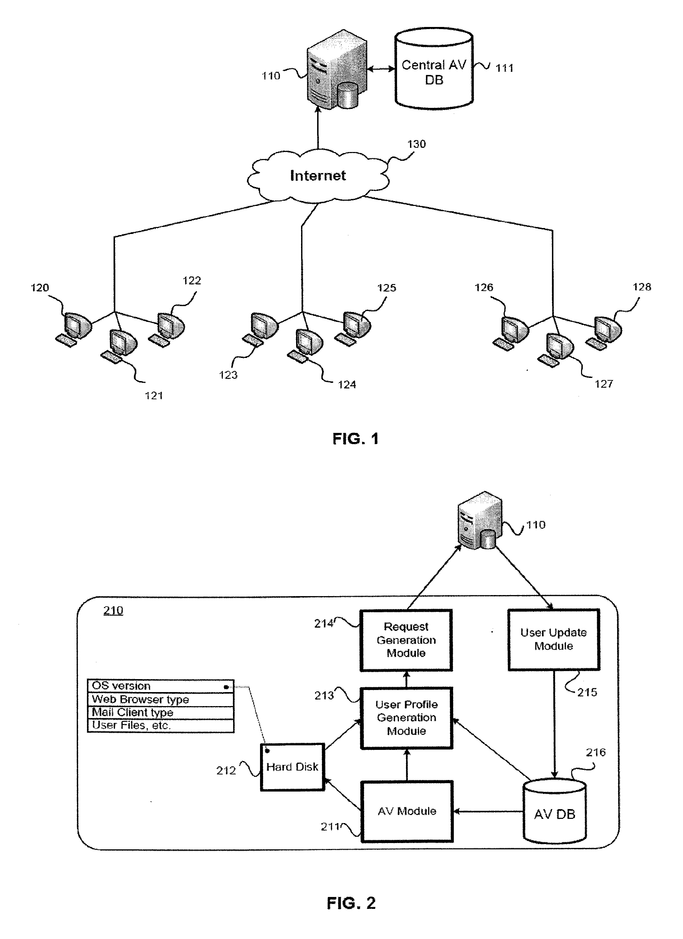

**FIG. 1** illustrates a general arrangement of a plurality of user computers, a server and an AV database, in accordance with the exemplary embodiment. Each of user PCs **120 -128** has a set of parameters that affect AV databases generated for each user. These parameters are discussed in more detail below. Each of the user PCs **120-128** has its own AV database. If some of the user computers have the same parameters, the AV databases for these computers contain the same data. The AV databases for the computers having different parameters contain different data. However, these databases can have some of the same data as well.

The AV databases **120-128** are formed based on information that is normally stored in the central database **111.** If the user computers have similar or the same characteristics, then their AV databases would be the same or similar. If some of the user computer parameters are similar, then the portions of the databases based on those parameters would be the same.

In the exemplary embodiment, server-to-client access is implemented over Internet **130** connections. The update server **110** generates AV databases for each user using a central AV database **111.** The parameters of each PC determine the content of the AV database generated for this PC. The update server **110** can update each AV database when the parameters of the corresponding PC change. The central AV database **111** contains data required for functionality of the AV systems running on each of the user PCs having an arbitrary parameter set. Note that the central AV database **111** has a size that is significantly larger than the size of a given user side AV database, because it contains all currently known malware-related data.

**FIG. 2** illustrates a user side of a system, in accordance with the exemplary embodiment. According to the exemplary embodiment, a user PC **210** includes an AV module **211** that scans a hard disk **212** for malware objects. The AV module **211** is supported by a user side AV database **216.** The hard disk **212** stores, for example, a system OS, a web browser, a mail client and other user files. The user PC **210** also includes a user profile generation module **213.** The module **213** collects parameters necessary for generating the user profile. The parameters contain at least the following:
- a user ID (a unique number);
- a user location (i.e., a geographical location - a country, or a region including several countries);
- a user computer information (OS version; locality parameters - user language, country, time zone, etc.; web browser type; mail client type, etc.);
- an AV application version;
- an AV database version;
- visited sites statistics;
- detected malware objects statistics.

Additionally, a list of user applications (that can be used by malware) can be used as a parameter. This information is taken into consideration in order to generate the AV database **216** that optimally fits the needs of the user **210,** who runs a particular set of the applications. The user parameter data is used by the update server **110** as criteria for generating the AV database **216.**

For example, user location may be used to form the signatures database, since the signatures database may be country-dependent, or language-dependent, etc.

A user computer information, which includes data about the installed OS, applications, and so on, since malware often targets specific vulnerabilities in the OS or in the application software.

Visited sites statistics, which permits determining the types of threats that can appear after visiting particular sites or categories of sites, and which can be taken into account when forming the AV database.

For example, if several user computers have the same location, same OS version, same web browser, same mail clients, etc., the AV databases generated for these computers are identical. However, the complete content of a particular AV **216** depends on each particular parameter of the user PC **210.** Therefore, a list of the parameters provided above can be augmented by additional parameters reflecting users and their PCs. It is important to come up with a set of the parameters that allows for generating the most optimal AV databases for individual users. Such AV databases provide for maximum user PC protection while having a minimal size possible.

Therefore, the size of the AV database **216** is advantageously reduced by dynamic generation of the AV database based on selected parameters of the user PC **210.** The system, in accordance with the exemplary embodiment, provides for additional configurations. For example, if a user PC **210** is uses as a mail server, the user profile generation module **213** can be configured so that the user PC **210** receives only a part of the AV database that is required for detection of viruses and spam in the mail messages. In this case, the AV database **216** will not have the part required for detection of viruses in downloaded web pages. The size of the AV database **216** is reduced accordingly.

In one embodiment, because of resource limitations (i.e., for example, bandwidth limits), the system can configure the user profile generation module **214** so that the AV database receives only the signatures corresponding to the most common malware objects. In this case, the security of the system is minimally reduced, while the size of the AV database **216** is significantly reduced.

The user profile generation module **213** prepares all data to be sent to the update server **110.** At an initial registration of the user computer **210** with the update server **110,** the user profile generation module **213** collects data required for registration. In order to do this, the user application data and the OS data are retrieved from the hard disk **212.** The version of the AV application is also retrieved from the AV module **211.** The version of the AV database **216** is determined. All of this data is provided by the user profile generation module **213** to a request generation module **214** that sends a request containing all user information to the update server **110.**

Upon initial registration by the user, the user receives the AV database that corresponds to those computer parameters (OS, applications installed, etc.) that the user can provide. Other information can include his location, versions of the OS or the applications, etc. Based on these parameters, the AV database for that user will be generated. Then, the user's computer will provide data to the server regarding visited sites and any identified malware, as well as any changes in the computer's configuration, versions of OS and applications, etc. - in other words, the user's profile on the server will be updated, and the AV database will be updated accordingly. Thus, each user will have an AV database that is optimized for him. In this case, a probability of this AV database being somewhat optimal for the user is rather high. Then, as the data from this user is collected by the update server, the user AV database is continuously modified so ultimately the user is provided with the most optimal AV database. If the user computer undergoes some changes (for example the OS is updated, new user application is installed, etc.), the changes are detected by the user profile generation module **213** and transferred to the update server **110.** Then, the update server **110** updates the user AV database **216** by adding new data that is required for a current parameter set.

The user profile generation module **213** also receives information about detected malware objects from the AV module **211** and transfers this information to the update server **110** via the request generation module **214.** The update server **110** collects statistics that are taken in consideration for generating user AV databases. The user PC **210** includes a user update module **215** that receives a new version of the AV database from the update server **110** and updates the user AV database **216.**

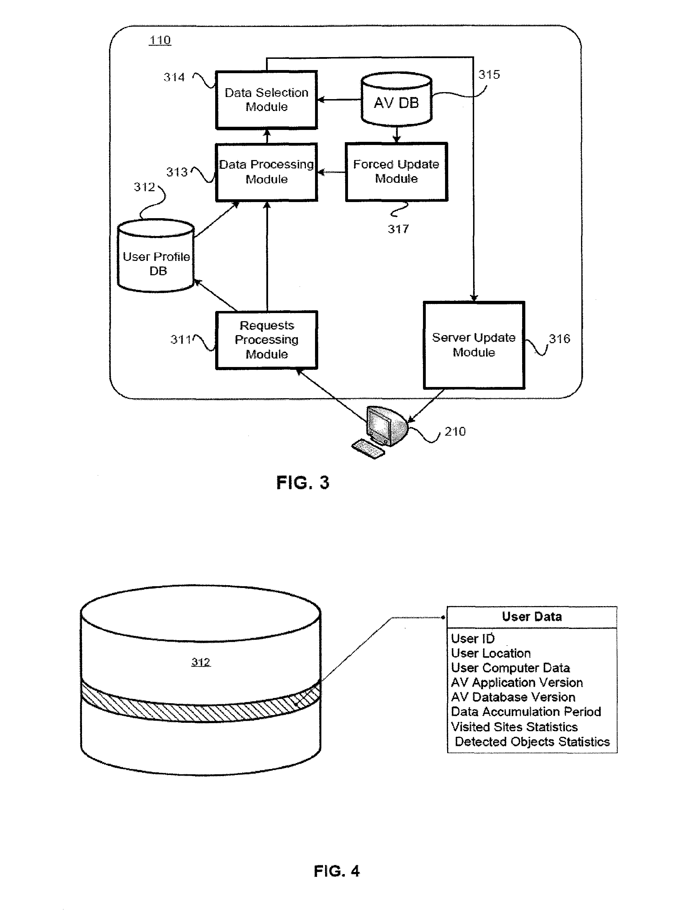

**FIG. 3** illustrates a server side of a system, in accordance with the exemplary embodiment. The update server **110** communicates with user computers via a request processing module **311** that receives user requests from user computers and processes the requests. The request processing module **311** inserts new data contained in the user request into a user profile database **312.** The request processing module **311** also informs a data processing module **313** about new user data received.

Alternatively, if a system does not have the user profile database **312,** the request processing module **311** transfers the received user data directly to the data processing module **313.** The user profile database **312** contains user-related data that is required for speeding up the user data analysis process. The user-related data does not affect a process of generation of the AV database. Therefore, in the alternative embodiments, the user profile database **312** can be absent from the update server **110.**

The data processing module **313** analyzes user PC-related data. This analysis includes data related to the detected malware objects. The analysis is performed in cases of planned updates of the user AV database. The analysis can be also performed upon receiving the user request for update of the user AV database. The analysis can also include checking the parameters for each user, where the user-specific database is formed based on the parameters.

If the user AV database needs to be updated, a corresponding request from the user PC is received into the request processing module **311.** The data processing module **313** analyzes data from the database **312.** Then, based on results of the analysis of the user profiles contained in the user profile database **312,** the data processing module **313** generates requirements for the user AV database and provides the requirements to a data selection module **314.**

If at least one of the parameters of the user PC has changed, a request containing the data reflecting parameter changes is received into the request processing module **311** and the changed parameter is inserted into the database **312.** The data processing module **313** generates new requirements based on the parameter changes. The data selection module **314** receives the requirements from the data processing module **313** and prepares required data by selecting the relevant portions (i.e., a subset of the central AV) from the central AV database **315.**

The selected portions of the database **315** are transferred to the user PC **210** by a server update module **316.** Then, the user update module **215** receives the selected portions and updates the user AV database **216.** Malware objects are periodically modified and new malware objects are created. Therefore, the central AV database **315** also needs to be updated. Some outdated and redundant records need to be deleted from the central AV database **315** as well. Thus, all changes in the central AV database **315** have to be reflected in the user AV databases.

According to the exemplary embodiment, the user AV databases **216** are kept in synch with the central AV database **315** by a forced update module **317.** The forced update module **317** sends a notification to the data processing module **313** upon the update of the central AV database **315.** Then, the data processing module performs data analysis (out of order) and generates new requirements for the user AV databases **216.** Then, the update of the user AV databases **216** is performed as described above.

Data contained in the user profile database **312** is depicted in **FIG. 4****.** Each user has a unique ID (a number or an alphanumeric string). The user profile database **312** contains all data received within user requests, for example: user location; user computer-related data; user AV application version; user AV database version; data accumulation period, visited sites-related statistics; detected malware objects statistics and etc.

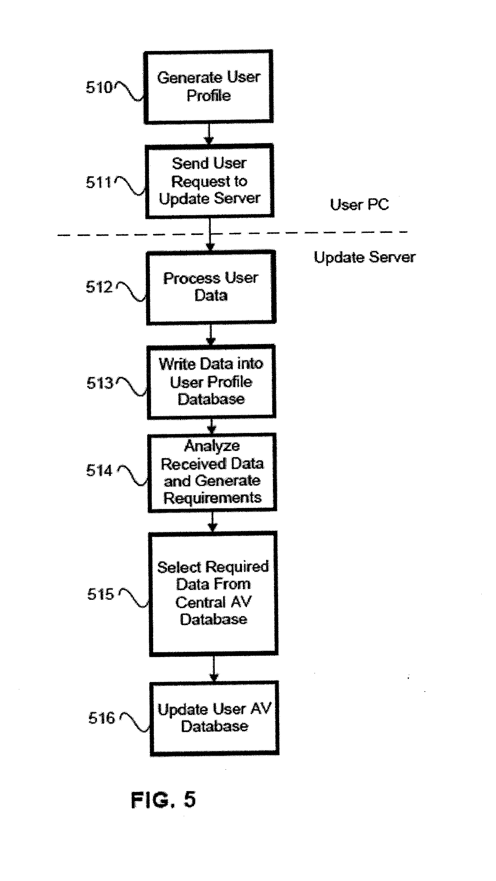

**FIG. 5** illustrates a flow chart of a method for dynamic generation of the AV databases, in accordance with the exemplary embodiment. In step **510** a user profile is formed based on data related to a user computer. A user request containing the user profile information is sent to an update server in step **511.** The user request data is processed in step **512** and written into the user profile database in step **513.** The user profile data is analyzed in step **514** and new requirements are generated. A relevant data is selected from the central AV database based on the new requirements in step **515.** The user AV database is updated in step **516** by the selected data.

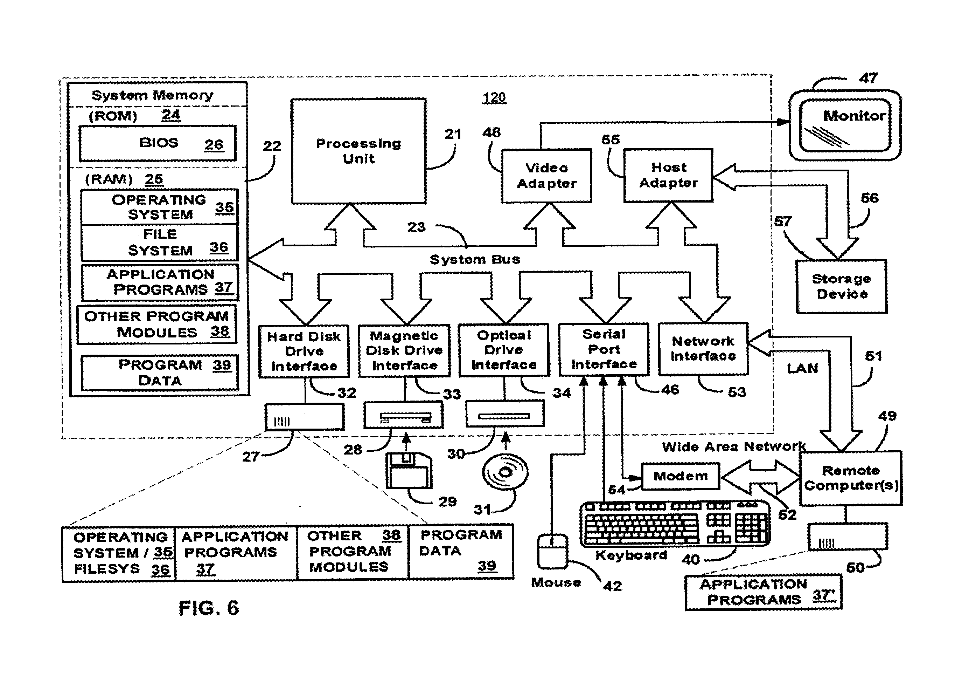

With reference to **FIG. 6****,** an exemplary system for implementing the invention includes a general purpose computing device in the form of a computer **120** or the like, including a processing unit **21,** a system memory **22,** and a system bus **23** that couples various system components including the system memory to the processing unit **21.**

The system bus **23** may be any of several types of bus structures including a memory bus or memory controller, a peripheral bus, and a local bus using any of a variety of bus architectures. The system memory includes read-only memory (ROM) **24** and random access memory (RAM) **25.** A basic input/output system **26** (BIOS), containing the basic routines that help transfer information between elements within the computer **120,** such as during start-up, is stored in ROM **24.**

The computer **120** may further include a hard disk drive **27** for reading from and writing to a hard disk, not shown, a magnetic disk drive **28** for reading from or writing to a removable magnetic disk **29,** and an optical disk drive **30** for reading from or writing to a removable optical disk **31** such as a CD-ROM, DVD-ROM or other optical media. The hard disk drive **27,** magnetic disk drive **28,** and optical disk drive **30** are connected to the system bus **23** by a hard disk drive interface **32,** a magnetic disk drive interface **33,** and an optical drive interface **34,** respectively. The drives and their associated computer-readable media provide nonvolatile storage of computer readable instructions, data structures, program modules and other data for the computer **120.**

Although the exemplary environment described herein employs a hard disk, a removable magnetic disk **29** and a removable optical disk **31,** it should be appreciated by those skilled in the art that other types of computer readable media that can store data that is accessible by a computer, such as magnetic cassettes, flash memory cards, digital video disks, Bernoulli cartridges, random access memories (RAMs), read-only memories (ROMs) and the like may also be used in the exemplary operating environment.

A number of program modules may be stored on the hard disk, magnetic disk **29,** optical disk **31,** ROM **24** or RAM **25,** including an operating system **35.** The computer **120** includes a file system **36** associated with or included within the operating system **35,** one or more application programs **37,** other program modules **38** and program data **39.** A user may enter commands and information into the computer **20** through input devices such as a keyboard **40** and pointing device **42.** Other input devices (not shown) may include a microphone, joystick, game pad, satellite dish, scanner or the like.

These and other input devices are often connected to the processing unit **21** through a serial port interface **46** that is coupled to the system bus, but may be connected by other interfaces, such as a parallel port, game port or universal serial bus (USB). A monitor **47** or other type of display device is also connected to the system bus **23** via an interface, such as a video adapter **48.** In addition to the monitor **47,** personal computers typically include other peripheral output devices (not shown), such as speakers and printers.

The computer **20** may operate in a networked environment using logical connections to one or more remote computers **49.** The remote computer (or computers) **49** may be another computer, a server, a router, a network PC, a peer device or other common network node, and typically includes many or all of the elements described above relative to the computer **20,** although only a memory storage device **50** has been illustrated. The logical connections include a local area network (LAN) **51** and a wide area network (WAN) **52.** Such networking environments are commonplace in offices, enterprise-wide computer networks, Intranets and the Internet.

When used in a LAN networking environment, the computer **120** is connected to the local network **51** through a network interface or adapter **53.** When used in a WAN networking environment, the computer **20** typically includes a modem **54** or other means for establishing communications over the wide area network **52,** such as the Internet.

The modem **54,** which may be internal or external, is connected to the system bus **23** via the serial port interface **46.** In a networked environment, program modules depicted relative to the computer **20,** or portions thereof, may be stored in the remote memory storage device. It will be appreciated that the network connections shown are exemplary and other means of establishing a communications link between the computers may be used.

Having thus described a preferred embodiment, it should be apparent to those skilled in the art that certain advantages of the described method and apparatus have been achieved. In particular, those skilled in the art would appreciate that the proposed system and method provide for a reduction of the AV databases by dynamically generating the AV database for the individual users based on user parameters.

## Claims

1. A computer-implemented system for dynamic generation of anti-virus (AV) databases, the system being part of a server (110) within a server-client environment, the system comprising:
a server-side AV database (315) containing data related to known malware objects;
a request processing module (311) configured for receiving and processing user requests from a user computer (120-128, 210), the user requests comprising data reflecting parameter changes in the user computer (120-128, 210); and
a server update module (316),
**characterized by**
a user profile database (312) connected to the request processing module (311), the user profile database (312) containing parameter changes which were inserted into the user profile database (312) by the request processing module (311);
a data processing module (313) connected to the request processing module (311) and to the user profile database (312), wherein the data processing module (313) is configured to generate requirements for a user-side AV database (216) based on the parameter changes received from the user profile database (312); and by
a data selection module (314) configured for receiving the requirements for the user-side AV database (216) from the data processing module (313) and for preparing required data by selecting a subset from the server-side AV database (315) based on the requirements,
wherein the server update module (316) is connected to the data selection module (314) and is configured for sending the subset to the user computer (120-128, 210) for updating the user-side AV database (216);
wherein the parameter changes comprise changes in a user geographical location; and
wherein the subset is the minimal relevant subset required for virus or malware detection on the user computer (120-128, 210) after the parameter changes.

2. The system of claim 1, further comprising a forced update module (317) coupled to the data processing module (313), wherein the forced update module (317) is configured to send a notification to the data processing module (313) when the server-side AV database (315) is updated.

3. The system of claim 1, wherein the parameter changes in the user geographical location further comprise changes of any of:
a user language;
a user country; and
a user time zone.

4. The system of claim 1, wherein the request processing module (311) is connected to a request generation module (214) of the user computer.

5. The system of claim 1, wherein the server update module (316) is connected to a user update module (215) located on the user computer and the server update module (316) is configured to send the subset of the AV database to the user update module (215).

6. The system of claim 1, wherein the user requests are received from a plurality of user computers and wherein the selected subsets are sent to the plurality of user computers for updating corresponding user-side AV databases (216).

7. The system of claim 1, wherein the server update module (316) provides the subset of the server-side AV database (315) to the user computer (120-128, 210) upon registration.

8. A computer-implemented method for dynamic generation of anti-virus (AV) databases, the method being performed on a server (110) comprising a user profile database (312) and an AV database (315) containing data related to known malware objects, the method comprising:
receiving and processing a user request by a request processing module (311), the user request being received from a user computer (120-128, 210) and containing data reflecting parameter changes in the user computer (120-128, 210);
inserting the parameter changes into the user profile database (312);
storing the parameter changes in the user profile database (312);
generating by a data processing module (313) requirements for a user-side AV database (216) based on the parameter changes received from the user profile database (312);
receiving by a data selection module (314) the requirements for the user-side AV database (216) from the data processing module (313), and preparing required data by selecting a subset from the server-side AV database (315) based on the requirements; and
providing by an update module (316) the subset to the user computer (120-128, 210) for updating the user-side AV database (216),
wherein the parameter changes comprise changes in a user geographical location; and
wherein the subset is the minimal relevant subset required for virus or malware detection on the user computer after the parameter changes.

9. The method of claim 8, wherein the parameter changes in the user geographical location further comprise changes of any of:
a user language;
a user country; and
a user time zone.

10. The method of claim 8, further comprising detecting updates of the server-side AV database.

11. The method of claim 8, further comprising generating new requirements based on the parameter changes from the user profile database (312), generating a new subset AV database based on the new requirements and providing the new subset AV database to the user for updating a user-side AV database (216).

12. A computer-implemented system for updating user anti-virus (AV) databases (216), the system being part of a user computer (110) within a server-client environment, the system comprising:
a user-side AV module (211) configured for scanning a user hard disk drive;
a user-side AV database (216) accessible by the AV module (211) and containing user-specific data related to known malware objects;
a request generation module (214); and
a user update module (215) configured for receiving an update from a server (110) and writing it to the user-side AV database (216),
**characterized by**
a user profile generation module (213) being adapted to detect changes in the user computer;
wherein the request generation module (214) is connected to the user profile generation module (213) for generating a request based on the detected changes, wherein the request generation module (214) is configured to send the request to a server-side request processing module (311) wherein the user update is generated as a subset of a server-side AV database (315) based on the user profile;
wherein the detected changes comprise changes in a user geographical location; and
wherein the subset is the minimal relevant subset required for virus or malware detection on the user computer after the detected changes.

13. The system of claim 12, wherein the user update module (215) is configured to receive a new subset of a server-side AV database (315) when the server-side AV database (315) is updated.

14. The method of claim 12, wherein the detected changes further comprise changes of any of:
a user language;
a user country; and
a user time zone.
